Europäisches Patentamt

European Patent Office

Office européen des brevets

(11) Publication number: **0 481 474 A1**

# EUROPEAN PATENT APPLICATION

(21) Application number: **91117692.3**

(22) Date of filing: **16.10.91**

(51) Int. Cl.5: **B01D 3/00**, B01D 5/00, C23G 5/04

(30) Priority: **18.10.90 IT 2177790**

(43) Date of publication of application:
**22.04.92 Bulletin 92/17**

(84) Designated Contracting States:
**DE ES FR GB IT SE**

(71) Applicant: **Alagna, Ettore**
**Via delle Ande, 5**
**I-20151 Milano(IT)**
Applicant: **Marolda, Giuseppe**
**Via Biancamano, 2**
**I-20052 Monza, Milano(IT)**
Applicant: **Guerinat, Daniel**
**6, Rue St. Paul**
**Paris(FR)**

(72) Inventor: **Alagna, Ettore**
**Via delle Ande, 5**
**I-20151 Milano(IT)**
Inventor: **Marolda, Giuseppe**
**Via Biancamano, 2**
**I-20052 Monza, Milano(IT)**
Inventor: **Guerinat, Daniel**
**6, Rue St. Paul**
**Paris(FR)**

(74) Representative: **Faggioni, Giovanmaria, Dr. et al**
**Fumero-Studio Consulenza Brevetti**
**Franz-Joseph-Strasse 38**
**W-8000 München 40(DE)**

(54) Machine for washing mechanical pieces with volatile solvents.

(57) The present invention concerns a machine for washing mechanical pieces with volatile solvents comprising, in combination, a gasproof washing chamber (1) provided with first heating means to keep the walls of the washing chamber at a temperature close to boiling temperature of the solvent, and means to recover the dirty solvent discharged from said chamber essentially consisting of a solvent distiller (10) provided with second heating means and with means to condense the vapours of the solvent. According to the invention, the washing chamber is at least partly surrounded by a gasproof annular cavity (3), said heating means of the washing chamber consist of at least part of the solvent vapours coming from said distiller (10) and fed into said annular cavity (3), and said condensing means at least partly consist of the walls of said annular cavity (3), which latter is provided with means to collect the condensate.

The present invention concerns a machine for washing pieces, particularly mechanical pieces, which forms an improvement on the machine described in the previous Italian Patent Application No. 19378 A/90 in the name of the same Applicants.

The machine proposed in said Patent Application comprises a gasproof washing chamber in which several washing steps are carried out, at least one of them at a temperature close to boiling temperature of the solvent used for washing. To keep said chamber at the right temperature, the same is provided with a heating system, which can besides consist of a jacket surrounding the lower part of the washing chamber and containing an oil bath at controlled temperature: such an arrangement actually allows to keep the walls of the washing chamber at a uniform and perfectly steady temperature.

A machine of this type is described in US-A-4008729, and comprises an air jacket into which are housed heating elements or resistors. In spite of the resistors being controlled by a thermostat, it is often difficult to prevent the forming of overheated areas, with consequent risks of solvent deterioration.

To overcome this difficulty, use has been made of jackets containing an oil bath, which actually allow to make the temperature in the wall of the washing chamber more uniform.

The object of the present invention is to improve said known construction, by proposing a machine allowing to make the best use of the heat supplied to the system, thereby saving energy and improving the working conditions.

This result is obtained mainly due to the fact that the washing machine - of the type comprising, in combination, a gasproof washing chamber provided with first heating means to keep the walls of the washing chamber at a temperature close to boiling temperature of the solvent, and means to recover the dirty solvent discharged from said chamber, essentially consisting of a solvent distiller provided with second heating means and with means to condense the vapours of the solvent - is essentially characterized in that the washing chamber is at least partly surrounded by a gasproof annular cavity, in that said heating means of the washing chamber consist of at least part of the solvent vapours coming from said distiller and fed into said annular cavity, and in that said condensing means at least partly consist of the walls of said annular cavity, this latter being provided with means to collect the condensate.

As can be easily understood, this construction has the great economical advantages of recovering the vaporization heat of the solvent supplied to the distiller so as to use it in the washing chamber, of allowing to reduce the size of the condensing means of the distiller, and of eliminating the system to control the temperature as this is already physically determined by the temperature of the vapours.

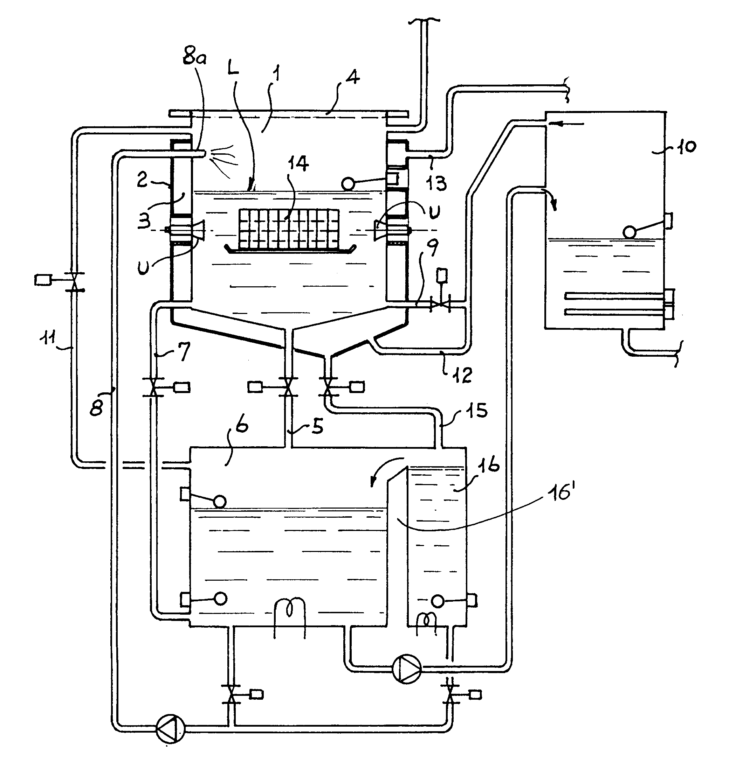

Further characteristics and advantages of the machine according to the invention will anyhow be more evident from the following detailed description of a preferred embodiment thereof, given by way of example and illustrated on the accompanying drawing which shows a general diagram of said machine.

As shown, the machine according to the invention comprises a washing chamber 1, the outer wall of which is almost totally surrounded by a jacket 2 forming a sealed gasproof annular cavity 3. The chamber 1 is moreover closed at the top by a cover 4 which is also gasproof.

A pipe 5 discharging towards a first solvent container 6 is connected to the bottom of the chamber 1. To the wall of the chamber 1 there is also connected a pipe 7, feeding the solvent coming from the container 6, and a pipe 9 feeding solvent vapours coming from the distiller 10, for the purpose better described hereinafter.

A pipe 11 connects furthermore the top part of the chamber 1 to the top part of the container 6, for the purpose of compensating the pressures.

According to the fundamental characteristic of the invention, the annular cavity 3 is connected to the vapour chamber of the distiller 10 through a first feed pipe 12 connected to the base of said annular cavity and, respectively, through a second discharge pipe 13 connected to the top of the annular cavity 3.

The working is as follows: after having placed the mechanical pieces to be washed into a support basket 14, and having hermetically sealed the cover 4, a pre-washing step is started in which the solvent vapours developed in the distiller 10 are let into the chamber 1 through the pipe 9. The chamber 1 fills up with vapours, which then condense onto the cold pieces and, flowing downward, carry out a pre-washing. The dripping solvent si collected onto the bottom of the chamber 1 and flows into the container 6 through the pipe 5.

In a second step, the liquid solvent is transferred from the container 6 into the chamber 1 through the pipe 7, filling said chamber up to a level L above the basket 14. The basket can be subjected to the action of ultrasounds (U) and/or be moved, for instance rotated, so as to thoroughly wash the pieces. After washing, the solvent is discharged into the container 6, also through the pipe 5.

In a third step, cleaner solvent is drawn from the container 16 - which forms part of the container 6 and is separated therefrom by a weir 16' - and is fed through a pipe 8 to the sprayers 8a, so as to carry out a final washing of the pieces.

In all these washing steps, the walls of the chamber 1 are kept at a temperature close to boiling temperature of the solvent, thanks to the heat supplied through the annular cavity 3. Said heat is in fact released by the vapours coming from the distiller 10 and fed through the pipe 12, which condense onto the walls of said annular cavity and collect onto the bottom. From here, the vapours are removed in the form of pure solvent and sent, through the pipe 15, into the container 16. The vapours which do not condense into the annular cavity 3, are removed through the pipe 13 and sent towards a cold condenser (not shown).

As can be easily realized, and as besides already mentioned, the great advantages of the machine according to the invention lie in the possibility to:
- recover most of the heat released by the vapours coming from the distiller 10, as they condense on the wall of the chamber 1, which heat is used to preserve the temperature in the chamber 1, with no other heat contribution;
- thus make sure that the temperature in the chamber 1 is always perfectly uniform and exactly at the required level, with no need to provide for specific thermostatic means in order to guarantee the control of said temperature; and
- reduce the dimensions of the cold condenser associated to the distiller 10, in that part of the vapours are condensed into the annular cavity 3.

Another technical advantage lies moreover in the fact that the pressure of the solvent vapours inside the chamber cannot reach a level beyond the atmospheric level (which can instead occur in known technique using a thermoregulated heating system, for instance in the case of an erroneous temperature setting, due to contact of the liquid solvent with exceedingly hot chamber walls).

There is hence no risk of the solvent being altered - with possible damages to people and things caused by the acid vapours which may be produced - due to overheating of the washing chamber walls in case of failure.

It is anyhow understood that the invention is not limited to the particular embodiment described heretofore - which is merely a general scheme, by no means limiting the scope of the invention - but that several variants are possible, all within reach of an expert of the art, without thereby departing from the scope of the invention itself. In particular, a technician of the field may easily plan a machine wherein the chamber 1 and the distiller 10 form a unitary assembly; in this case, the chamber 1 can be mounted into the upper part of the distiller 10 and the annular cavity 3 may be formed between the outer wall of the chamber 1 and the inner wall of the vapour chamber of the distiller 10.

## Claims

1. Machine for washing mechanical pieces with volatile solvents comprising, in combination, a gasproof washing chamber provided with first heating means to keep the walls of the washing chamber at a temperature close to boiling temperature of the solvent, and means to recover the dirty solvent discharged from said chamber essentially consisting of a solvent distiller provided with second heating means and with means to condense the vapours of the solvent, characterized in that said washing chamber is at least partly surrounded by a gasproof annular cavity, in that said heating means of the washing chamber consist of at least part of the solvent vapours coming from said distiller and fed into said annular cavity, and in that said condensing means at least partly consist of the walls of said annular cavity, this latter being provided with means to collect the condensate.

2. Machine as in claim 1), wherein said annular cavity is formed between the outer wall of the washing chamber and the inner wall of a jacket at least partially surrounding said washing chamber.

3. Machine as in claim 2), wherein said jacket surrounds the whole lateral and lower surface of the washing chamber.

4. Machine as in claim 1), wherein the washing chamber and the distiller are formed as a unitary assembly, said annular cavity being formed between the outer wall of the washing chamber and the inner wall of the vapour chamber of the distiller.

European
Patent Office

EUROPEAN SEARCH
REPORT

Application Number

EP 91 11 7692

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-4 008 729   (CHIZINSKY) <br> * abstract; claims; figure * * <br> – – – | 1-4 | B 01 D 3/00 <br> B 01 D 5/00 <br> C 23 G 5/04 |
| A | US-A-4 755 261   (MC CORD ET AL) <br> – – – | | |
| A | US-A-3 595 037   (POMPEI) <br> – – – | | |
| A | EP-A-0 069 663   (HARQUEVAUX) <br> – – – | | |
| A | FR-A-662 742   (CHEMISCHE WERK ZÜRICH) <br> – – – – – | | |

| | |
|---|---|
| | TECHNICAL FIELDS SEARCHED (Int. Cl.5) |
| | B 01 D <br> C 23 G |

The present search report has been drawn up for all claims

| Place of search | Date of completion of search | Examiner |
|---|---|---|
| The Hague | 22 January 92 | LO CONTE C. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document